# EUROPEAN PATENT SPECIFICATION

(11) **EP 0 404 201 B1**
(45) Date of publication and mention of the grant of the patent: **16.07.1997**
(21) Application number: 90112976.7
(22) Date of filing: 22.05.1987
(51) Int. Cl.: A01N 33/18, A01N 25/04

(54) **Aqueous suspension concentrate compositions**
Wässerige Suspensionskonzentrate
Suspensions aqueuses concentrées

(30) Priority: 23.05.1986 US 867107
(43) Date of publication of application: 27.12.1990
(62) Divisional of application: 87107495.1
(73) Proprietor: AMERICAN CYANAMID COMPANY, Wayne, NJ 07470-8426 (US)
(72) Inventor: Morgan, Leonard John, Fareham, Hampshire (GB); Bell, Mark, Fareham, Hampshire (GB)
(74) Representative: Wächtershäuser, Günter, Prof. Dr.

(56) References cited:
- EP-A- 0 163 598
- EP-A- 0 190 995
- DE-A- 3 302 648

## Description

### BACKGROUND OF THE INVENTION

Suspension concentrate pesticidal compositions or aqueous flowable compositions are concentrated suspensions of water-insoluble pesticides and mixtures of pesticides in an aqueous system. The present invention relates to stable such pendimethalin compositions.

EP-A-0 163 598 discloses flowable herbicide compositions in the form of aqueous suspensions comprising Chlorotoluron, Isoproturon and Linuron optionally in combination with another herbicide such as Pendimethalin.

EP-A-0 190 995 discloses flowable herbicide aqueous suspensions comprising pendimethalin and Chlortoluron.

These aqueous compositions frequently contain about 10% to 80%, by weight, of a solid pesticide or mixture of solid pesticides, thereby providing a method for handling those pesticides which are relatively water insoluble in an aqueous medium. Since these types of compositions have the desirable characteristics of a thick liquid, they may be poured or pumped. Thus, some of the problems, like dusting that is possible in solid compositions of wettable powders and granulars, are avoided. Further, these aqueous-based concentrates also have the added advantage of not requiring the use of organic solvents, often present in emulsifiable concentrates.

For these reasons, it is desirable to formulate pesticides into suspension concentrates or aqueous flowables. However, such formulations have their own problems such as gelling, caking and settling, as well as problems because of the physical and chemical characteristics of the pesticide or mixture of pesticides. For instance, the dinitroaniline, pendimethalin, is somewhat difficult to formulate and several references have tried to address these formulation problems.

The problems associated with the development of suspension concentrate compositions containing low melting active ingredients, alone or in combination with higher melting active ingredients, are described in German Patent Application DE 3302648 A1. German Patent Application DE 3302648 A1 tries to deal with the problems of an aqueous mixed dispersion of a low melting active ingredient in a solvent of phthalic acid C₁-C₁₂ alkyl esters in combination with an aqueous suspension concentrate containing one or more active ingredients as an alternative to a suspension concentrate containing low melting active ingredients, such as pendimethalin[N-(1-ethylpropyl)-2,6-dinitro-3,4-xylidine]. The reason for the alternative approach of that application is the inability to prepare stable suspension concentrates by various techniques, including those of European Patent Application 0 33291 2. That EPO application describes insecticidal suspension concentrate compositions of phosalone and adjuvants which may be prepared with molten insecticide.

Pendimethalin is difficult to formulate not only in a suspension concentrate, but in other forms, as well for several reasons. One is that polymorphic crystals of pendimethalin exist, orange macrocrystals and yellow microcrystals, with the orange form being favored. In formulating pendimethalin in other than suspension concentrates, stabilized pendimethalin had to be used. United States Patents 4,082,537 and 4,150,969 respectively disclose compositions containing either a sodium dialkyl (C₆-C₈) sulfosuccinate or an ethoxylated β-diamine as described. These patents describe the use of sulfosuccinates and β-diamines in order to stabilize pendimethalin's crystal form to the yellow form and to formulate it in a wettable powder composition.

Not only does pendimethalin exist in two crystal forms, but further crystallization occurs when pendimethalin is finally formulated. These formulations often exhibit stability problems related to rapid crystal formation of final product. Very large, elongated crystals (about 3,000 microns in length) are formed in final formulations which result in instability. Thus, formulating compositions wherein these elongated crystals do not develop is crucial to stability of pendimethalin compositions and is necessary to obtain even distribution of active compound for application.

It is an object of the present invention, therefore, to provide stable aqueous suspension concentrate compositions or aqueous flowable compositions of the low-melting dinitroaniline, pendimethalin, either alone or in combination with other pesticides. Although any secondary pesticide may be used, those having higher melting points or pesticides which are water soluble are suited to the compositions of this invention. Further, it is an additional object of the present invention to provide methods for preparing such stable aqueous suspension concentrate compositions or aqueous flowable compositions so that the final compositions do not result in formation of elongated crystals which interfere with processing and active component efficacy for application.

These and other objects will become more apparent by the detailed description of the invention provided herein.

### SUMMARY OF THE INVENTION

The present invention relates to stable aqueous suspension concentrate compositions or aqueous flowable compositions comprising pendimethalin, alone or in combination with other pesticides. Although most secondary pesticides can be used, those having melting points greater than 70°C or pesticides which are water soluble are suited in the compositions of the invention. Typically, the compositions of the invention comprise, on a weight to volume basis, 5.0% to 50.0% pendimethalin; 0% to 50.0% of one or more secondary pesticide(s); 3.0% to 30.0% coformulants, as described in more detail hereinbelow; and 20.0% to 92.0% water.

The stable compositions of the invention are readily prepared by forming an emulsion of molten pendimethalin in water containing the coformulants, surfactants, dispersing and/or wetting agents, antifoaming agents and suspending agents. This emulsion has an average droplet size in a range of less than 2 microns to about 10 microns, preferably 2 microns to 6 microns. This is then cooled and optionally milled to obtain an average particle size of suspended particles of less than 20 microns, preferably less than 5 microns.

### DETAILED DESCRIPTION OF THE INVENTION

The compositions of the invention comprise on a weight to volume basis, 5.0% to 50.0% pendimethalin; 0% to 50.0% of one or more particularly selected secondary pesticide(s) having a melting point greater than 70°C or being water soluble; 3.0% to 30.0% of particularily selected coformulants, such as surfactants, dispersing agents, wetting agents, antifreezing agents, antifoaming agents, thickening agents, gums, preservatives and 20.0% to 92.0% water.

Pesticides suitable for use in the composition of the present invention include, triazines, imidazolinones, alone or in combination, amongst just a few. Fungicides, insecticides and plant growth regulators which have melting points greater than 70°C and/or possess physical properties which are amenable to the preparation of aqueous suspension concentrate compositions also may be used in the compositions of the present invention.

Additionally, water-soluble pesticides, such as difenzoquat, amine salts, alkali or alkali metal salts of ioxynil, bromoxynil, phenoxy acetic acids, and imidazolinyl carboxylic acids such as 2-(4-isopropyl-4-methyl-5-oxo-2-imidazolin-2-yl)-3-quinolinecarboxylic acid and the like may readily be incorporated into the stable aqueous suspension concentrate compositions of this invention.

Preferred higher melting (greater than 70°C) components for use in the aqueous suspension compositions of the invention containing pendimethalin include: Atrazine, [2-chloro-4-ethyl-amino-6-isopropylamino-1,3-5-triazine]; Imidazolinone herbicides such as 2-(4-isopropyl-4-methyl-5-oxo-2-imidazolin-2-yl)-3-quinolinecarboxylic acid and water soluble salts thereof, and the isomeric mixture of methyl 6-(4-isopropyl-4-methyl-5-oxo-2-imidazolin-2-yl)-m-toluate and methyl 2-(4-isopropyl-4-methyl-5-oxo-2-imidazolin-2-yl)toluate. Other secondary active components include terbutylazine, 2-tert-butylamino-4-chloro-6-ethylamino-1,3,5-triazine and metolachlor, 2-chloro-6'-ethyl-N-(2-methoxy-1-methylethyl)acet-o-toluidide.

Surfactants (including dispersing agents and/or wetting agents) suitable in the aqueous suspension compositions of the invention containing solid pendimethalin include: ethylene oxide/propylene oxide condensates; alkyl,aryl- and aryl,arylethoxylates and derivatives thereof; lignosulfonates; cresol- and naphthaleneformaldehyde condensates and sulfonates; polycarboxylates and derivatives thereof; and mixtures thereof.

In general, anionic polymerics, such as cresol formaldehyde condensates and their sulfonates, naphthalene formaldehyde condensates and their sulfonates and lignosulfonates have been found to minimize crystal formation during storage and as such, are most preferred.

Suspending agents such as polysaccharide gums like Xanthan gum, guar gum; gum arabic and cellulose derivatives, and the like are suitable for addition to the hot emulsion in amounts of 0.02% to 3.0%, on a weight to volume basis. These aid in stabilizing the emulsion of a desired droplet size by increasing the viscosity of the emulsion from an initial viscosity of 100 cps to 1,000 cps or greater prior to cooling.

Preservatives to prevent microbial spoiling of the compositions of the invention are included as necessary. One example is a 38% solution of formaldehyde. Other preservatives include methyl and propyl parahydroxybenzoate, 2-bromo-2-nitro-propane-1,3-diol, sodium benzoate, glutaraldehyde, O-phenylphenol, benzisothiazolinones, 5-chloro-2-methyl-4-isothiazolin-3-one, pentachlorophenol, 2-4-dichlorobenzylalcohol, mixtures thereof and others known to those in the art. Siliconic antifoaming agents are useful in the present compositions.

Antifreezing agents such as ethylene glycol, propylene glycol, other glycols, glycerine or urea may then be added to the resulting aqueous suspension concentrate compositions. Additional surfactants, preservatives and thickening agents, such as clays, precipitated silicas, polyvinyl alcohol, polyvinylpyrrolidone, polyacrylamides and the like, may then be added, as can higher melting active components or a suspension concentrates containing other active components.

### Process Of Manufacturing

Stable aqueous suspension concentrate compositions of pendimethalin may be prepared by: emulsifying molten pendimethalin in hot water (50°C to 80°C) containing a surfactant and antifoaming agent to achieve the desired droplet size. Then a suspending agent is added. The resulting hot emulsion is cooled and agitated, allowing the molten material to solidify. The resulting composition may then be milled, if desired, or additional higher melting active components and coformulants, such as antifreezing agents, surfactants, thickeners, preservatives and the like or a preformed suspension concentrate containing one or more active component and coformulants is added. The aqueous suspension concentrate compositions containing pendimethalin in combination with higher melting or water soluble components may then be subjected to additional milling, if desired.

The above method of preparation lends itself to a variety of optional processing steps, such as (1) molten emulsion followed by cooling with no further processing; (2) molten emulsion followed by cooling and optionally adding other active components and coformulants and then milling; (3) molten emulsion in the presence of higher melting active components with concurrent milling followed by cooling; (4) molten emulsion concurrently milled and cooled, then mixing to allow crystallization and standing ("aging") with or without secondary active components and a second milling.

Alternatively, the molten pendimethalin may be dispersed at ambient temperature in a water solution of coformulants, containing if desired, other higher melting active components, followed by milling.

### Compositions

Surprisingly, stable aqueous suspension concentrate compositions of pendimethalin, alone or in combination with other active pesticidal components may be prepared by the above methods containing, on a weight to volume basis:
5.0% to 50% pendimethalin;
0.05% to 1.0% antifoaming agents;
2.0% to 20.0% antifreezing agent;
2.0% to 20.0% surfactants and mixture of surfactants (wetting and dispersing agents);
0.05% to 3.0% thickening agents;
0.01% to 1.0% preservatives;
0.05% to 2.5% suspending agents;
and sufficient water to total 100%. These compositions do not form large, elongated crystals after being processed. Therefore, processing and manufacturing is not halted because of the crystal growths. Further, the compositions are stable without sedimentation of active component in these large (3000 micron) crystals and most importantly, the application of these compositions results in an even dispersibility of active component.

The following examples further illustrate the present invention but are not limitative thereof.

### EXAMPLES 1-15

### Method A

### Preparation of stable aqueous suspension concentrate compositions of pendimethalin, alone or in combination with other higher melting herbicides

An aqueous solution containing surfactants and antifoaming agents at temperatures 50°C to 80°C is prepared. Then, the molten pendimethalin (60°C to 80°C) is added and agitated sufficiently to obtain an emulsion having an average droplet size of about 2 microns to 10 microns. This stabilized emulsion is cooled to ambient temperature, allowing the pendimethalin to solidify, whereupon the desired additional coformulants or active components (antifreezing agents, suspending agents, surfactants, pesticides) are added to the resulting aqueous suspension of solid pendimethalin.

The resulting aqueous composition is milled to achieve the desired average particle size of suspended particles of less than 20 microns, preferably less than 5 microns; and finally, additional thickening agents, preservatives, or surfactants, as desired, are admixed with the aqueous composition. This is then packaged as the aqueous suspension composition.

Utilizing the above procedure yields the stable aqueous suspension concentrate compositions listed in Table I.

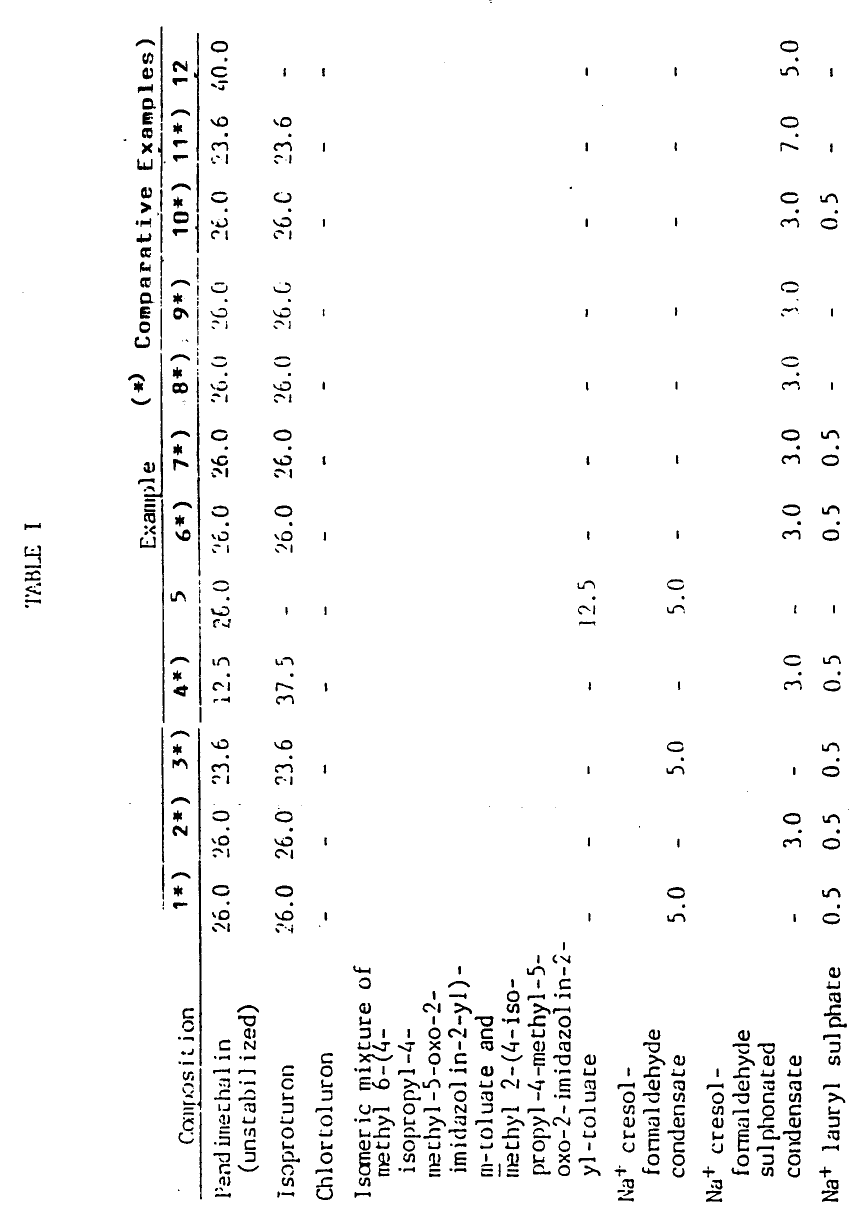

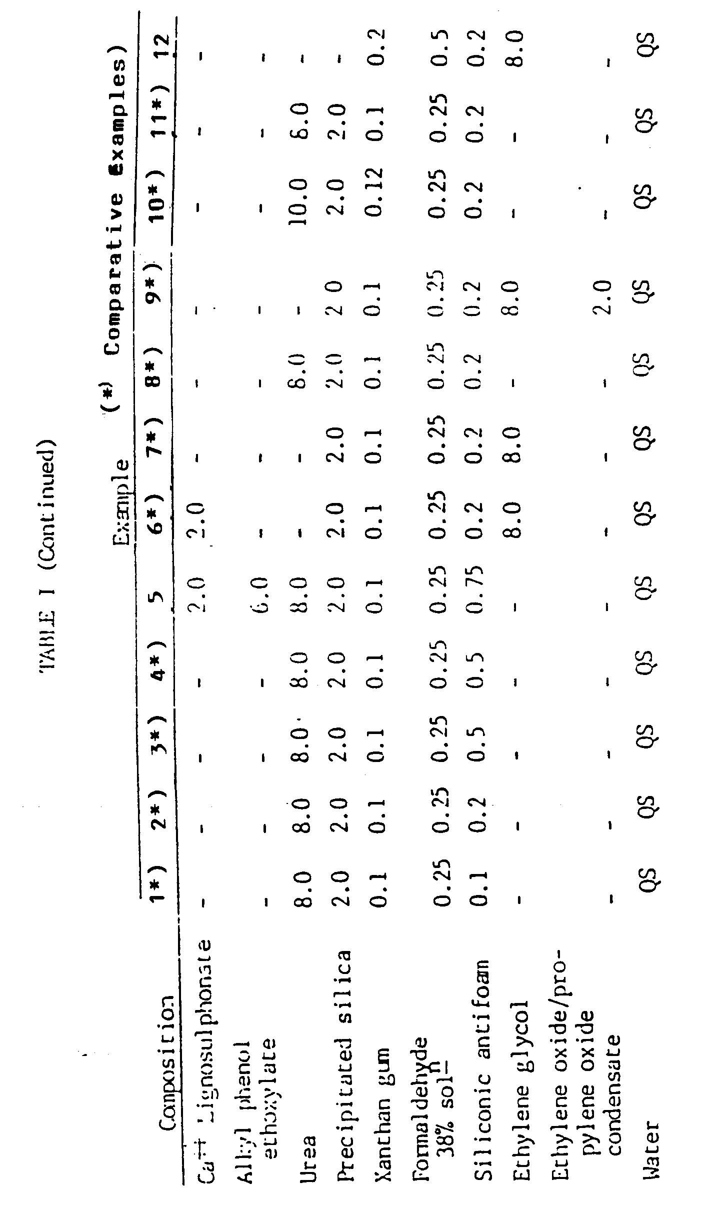

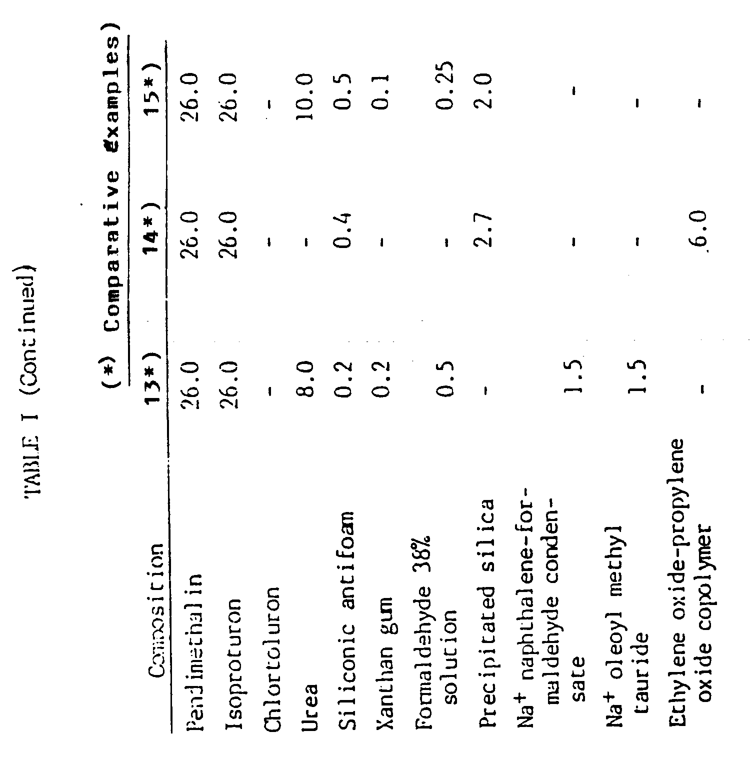

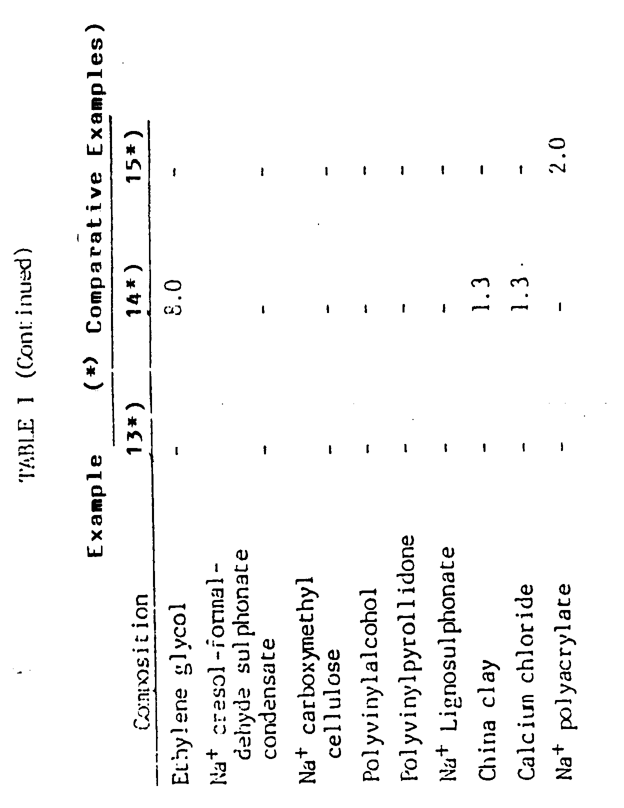

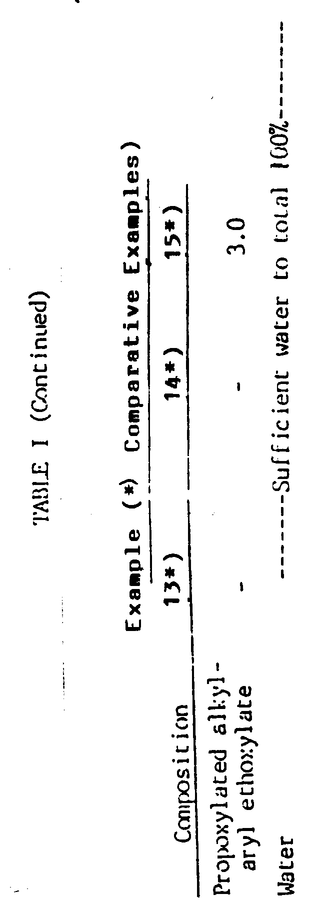

### EXAMPLES 16-34

### Method B

### Preparation of stable aqueous suspension concentrate compositions of pendimethalin, alone or in combination with other active components

An aqueous solution containing surfactant(s) and anti-foaming agents is prepared at a temperature of 50°C to 80°C. Then, the molten pendimethalin (60°C to 80°C) is added to the aqueous solution while agitating sufficiently to obtain an emulsion having an average droplet size of about 2 microns to 10 microns. Sufficient suspending agent is added to this to stabilize the thus-formed emulsion, and this is cooled to ambient temperature, allowing the pendimethalin to solidify, whereupon the additional coformulants, as desired, are admixed to the emulsion. This can then be packaged.

Further, a suspension of a pesticide having a melting point greater than 70°C is prepared and milled to a suitable average particle size (i.e. less than 20 microns, preferably less than 5 microns) or an aqueous solution containing the desired amount of a water-soluble pesticide is prepared.

Either one of these is then admixed with the suspension concentrate composition of pendimethalin prepared hereinabove. Finally, additional thickening agents, preservatives or surfactants, as desired, are added, and this is then packaged as the mixed aqueous suspension concentrate composition.

Utilizing the above procedure yields the stable aqueous suspension concentrate compositions listed in Table II.

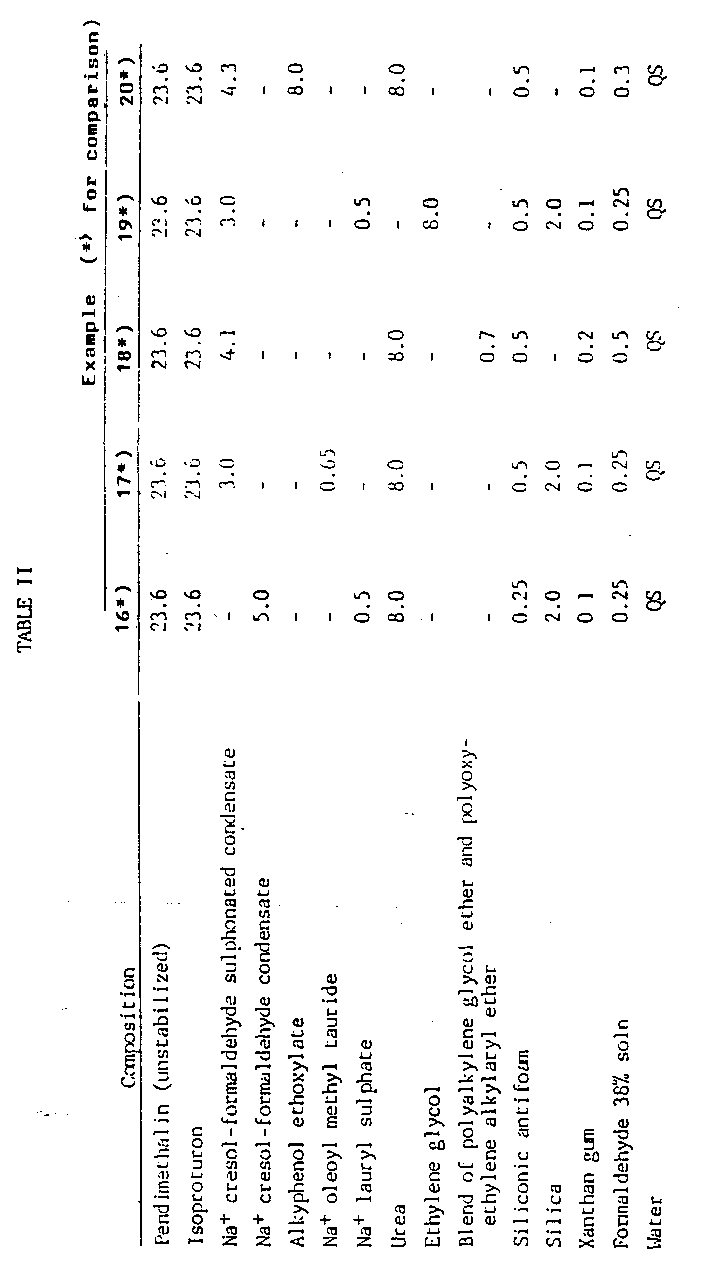

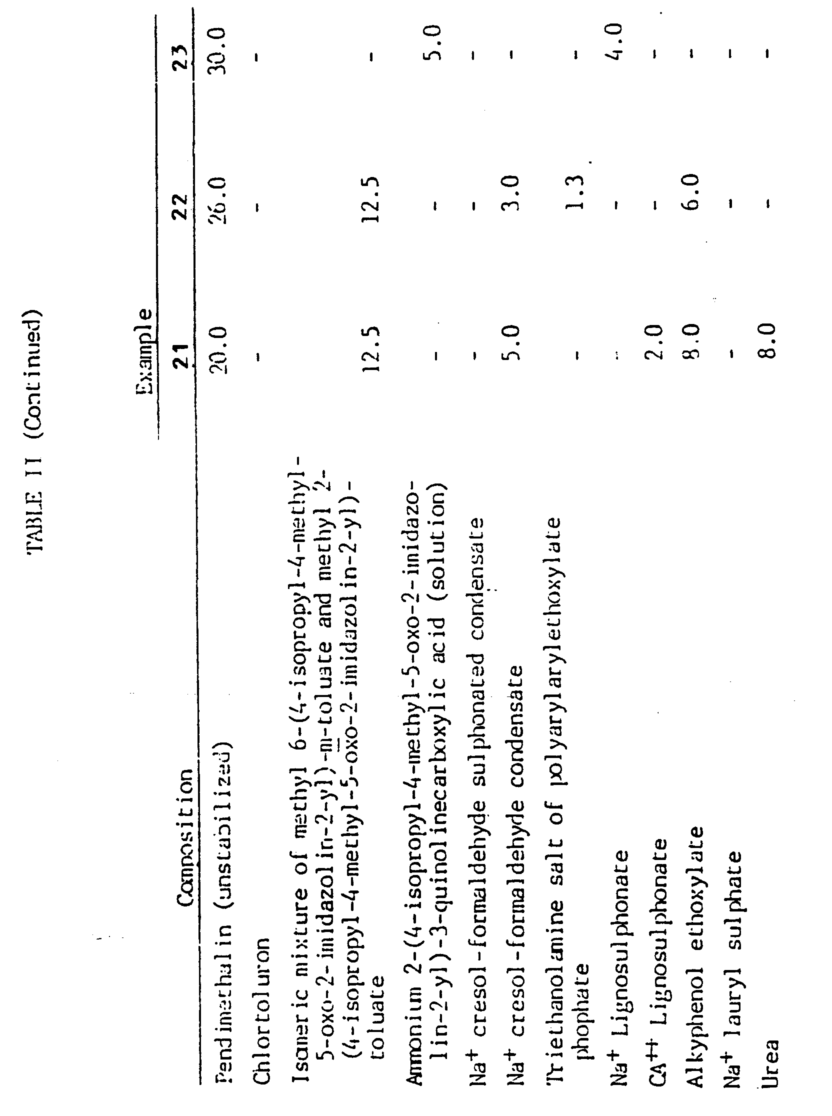

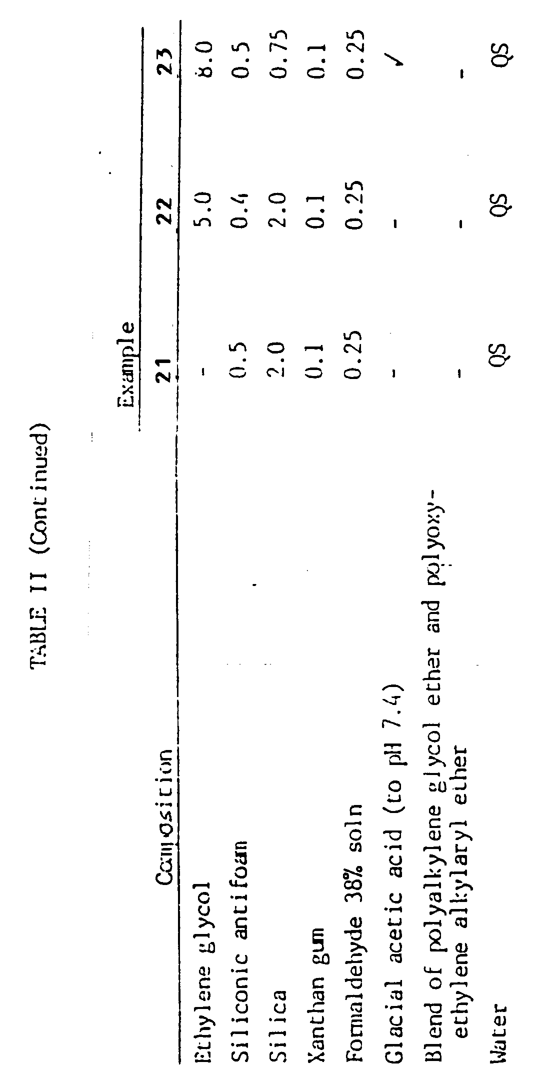

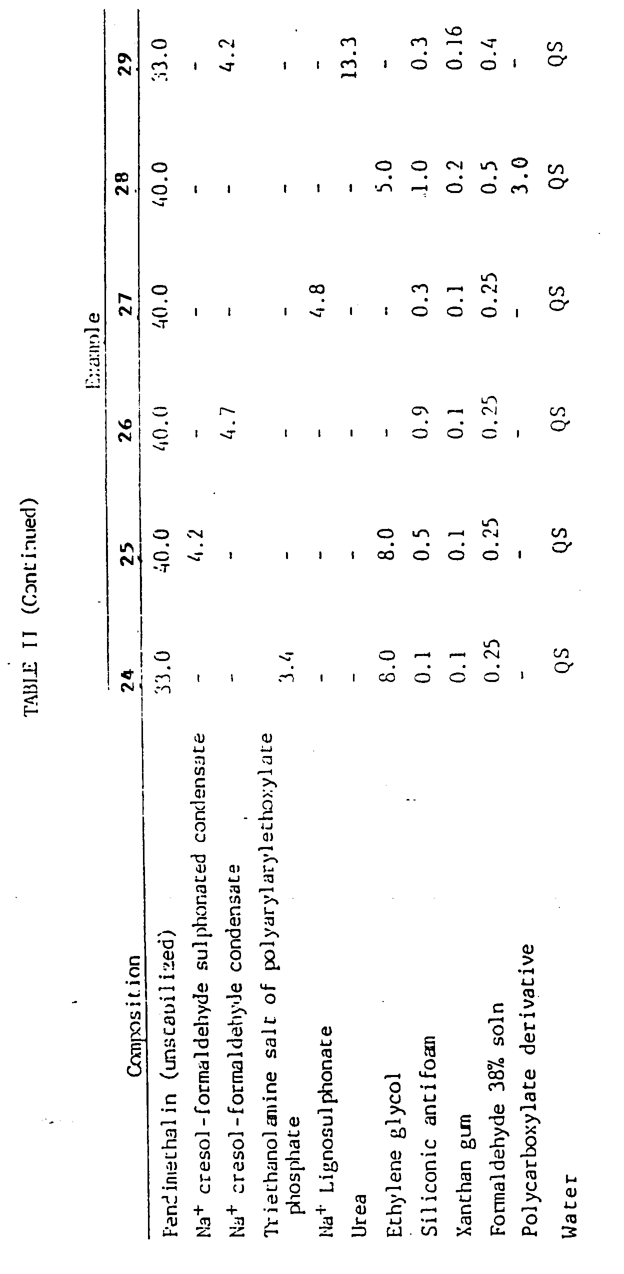

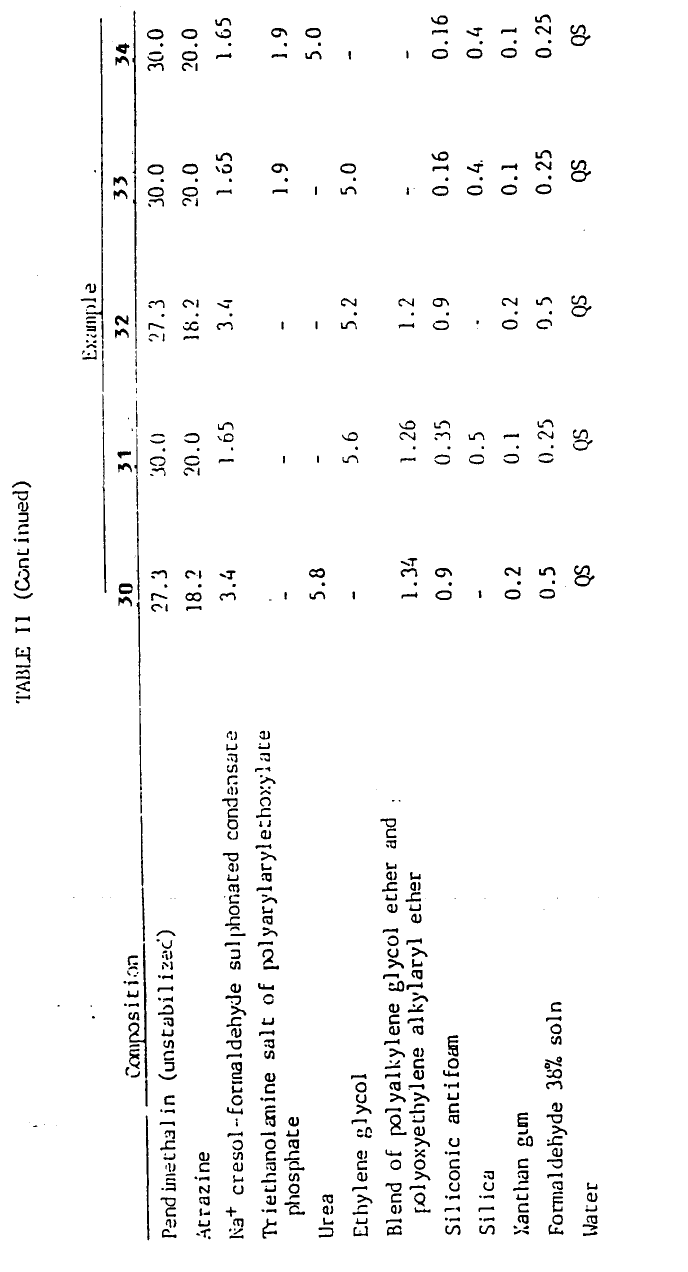

### Comparative EXAMPLES 35 and 36

### Method C

### Preparation of stable aqeuous suspension concentrate compositions

An aqueous dispersion of surfactants, antifoaming and antifreezing agents, containing, if desired, a solid active component having a melting point greater than 70°C, is prepared or a water soluble active component is prepared at ambient temperatures. The molten pendimethalin (60°C to 80°C), with or without additional surfactants, is then added to the agitated aqueous mixture. This resulting aqueous mixture is milled to achieve the desired average particle size of suspended solids, less than 20 microns, preferably less than 5 microns, and additional thickening agents, suspending agents, preservatives, antifreezing agent and surfactants, as desired, are admixed to the milled composition. This is then packaged as the resulting stable aqueous suspension concentrate composition.

Utilizing the above procedure yield the stable aqueous concentrate compositions listed in Table III.

**TABLE III**

| Composition | Comparative Example | |
|---|---|---|
| | 35 | 36 |
| Pendimethalin (unstabilized) | 26.0 | 26.0 |
| Isoproturon | 26.0 | 26.0 |
| Na⁺ cresol-formaldehyde sulphonated condensate | 3.0 | - |
| Polyarylarylpolyoxyethylene phosphate, acid form | - | 5.0 |
| Siliconic antifoam | 0.2 | 0.2 |
| Xanthan gum | 0.2 | 0.12 |
| Formaldehyde 38% solution | 0.5 | 0.5 |
| Ethanediol (Ethylene glycol) | 8.0 | - |
| Water | QS | QS |

### EXAMPLES 37 and 38

### Methods A and E

### Preparation of stable aqueous suspension concentrates of pendimethalin via the method of the invention versus the method of milling while cooling an emulsion (Method E)

An aqueous suspension concentrate composition of pendimethalin was prepared according to Examples 1-15, Method A. As a comparision, a suspension concentrate of pendimethalin was prepared according to the description of EPO Application 033291.2.

A mixture of hot water (575 cc), ethylene glycol (50 g) and an anionic surface-active agent (a mixture of the monophosphate and the diphosphate of tristyrylphenol with a polyoxyethylene of 18 oxyethylene units, neutralized with triethanolamine, marketed under the tradename of Soprophor FL® by Rhone-Poulenc) (50 g) is vigorously agitated while 400 g of pendimethalin are added. This is then ground in a dyno mill with a jacket for rapid cooling, resulting in a mixture leaving the mill at 24°C and having a particle size of 98% less than 5 microns, indicating the formation of a suspension concentrate.

A Xanthan gum biopolymer of a heteropolysaccharide type (1.5 g), produced by fermentation of Xanthomonas campestris on carbohydrates (tradename Rhodopol XB 23 marketed by Rhone-Poulenc), is added.

Table IV summarizes the stability observations of the two compositions. The milling method does not avoid the appearance of elongated crystals even upon two short periods of storage, one three day storage at 15°C and one three day storage at 28°C.

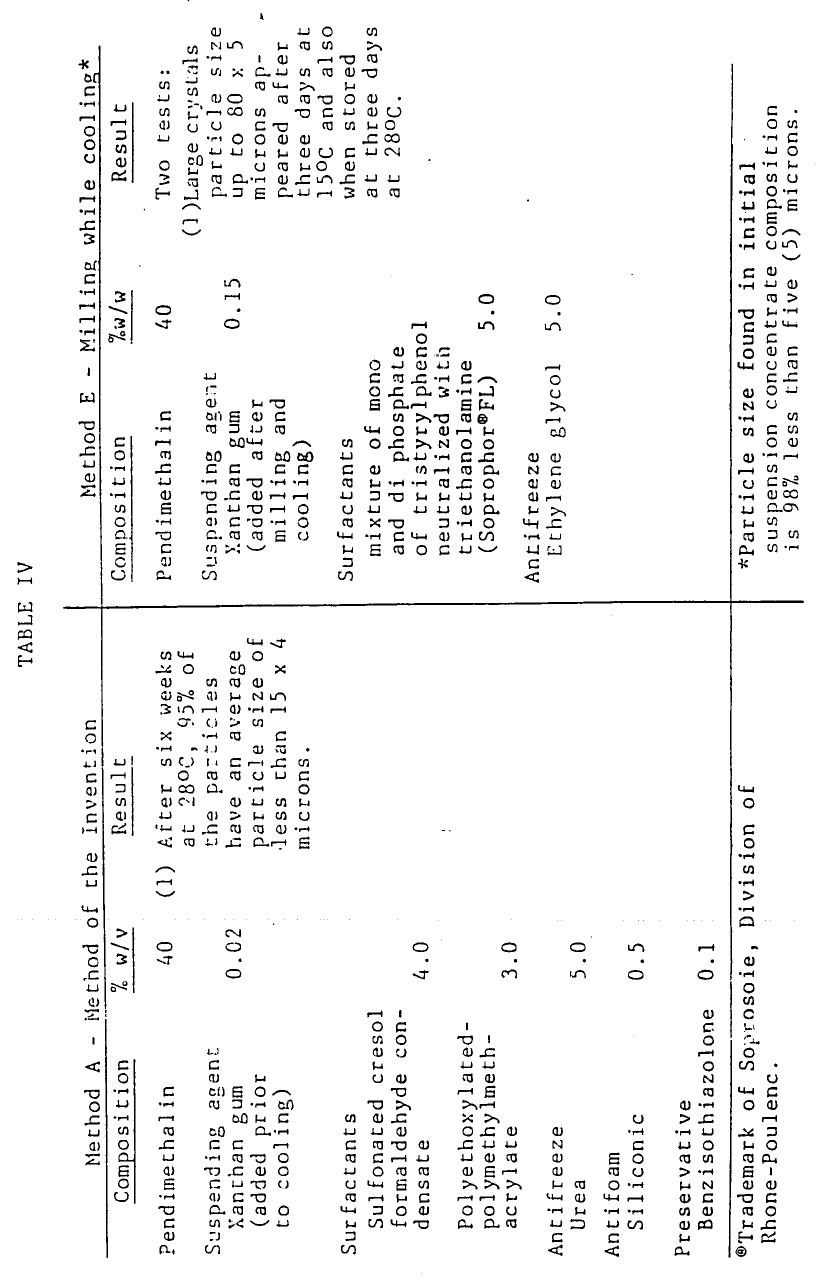

### EXAMPLES 39-40

### Compositions containing active compound of the invention

An aqueous suspension concentrate composition of pendimethalin with a secondary pesticide was prepared according to Examples 1-15 containing the following components:

| | (% w/v) | |
|---|---|---|
| | Formula X *) | Formula Y |
| Pendimethalin | 23.6 | 20.0 |
| Isoproturon | 23.6 | - |
| Chlortoluron | - | - |
| Na cresol-formaldehyde Sulphonated condensate surfactant | 4.1 | 4.14 |
| Polycarboxylate surfactant | - | 1.64 |
| Blend of polyalkylene glycol ether and polyoxyethylene alkyl aryl ether | 0.71 | - |
| Urea | 8.0 | 8.0 |
| Xanthan gum | 0.2 | 0.2 |
| 30% siliconic antifoam | 0.5 | 0.3 |
| Benzisothiazolinone | - | 0.033 |
| Methyl paraben | 0.1 | - |
| Propyl paraben | 0.05 | - |
| Water To | 100% | 100% |

| | | |
|---|---|---|
| *) Comparative | | |

### EXAMPLES 41-42

### Compositions using hot emulsion double milling process

A hot emulsion of molten pendimethalin is prepared as in Examples 1-15 wherein hot pendimethalin is added to the hot solution of surfactant whilst mixing at high shear. The temperature is 50°C to 80°C with a particle size of 2µ to 5µ. The hot emulsion is then miled through a Dyno-Mill and exits as a shattered crystalline form (temperature into mill is about 65°C, and temperature exiting is about 20°C to 25°C). This mixture is allowed to "age" to allow orange polymorph crystal conversion. Following conversion, usually 0.5 to 48 hours, a second milling in a Dyno-Mill occurs. (In the event another active pesticide is added, it is added into the aging period stage). Once milled a second time, final coformulants are added.

The following compositions are prepared according to the above procedures.

| | Concentrate |
|---|---|
| | % w/w |
| Pendimethalin technical | 40.0 |
| Soprophor® FL surfactant | 5.0 |
| Silnaolapse® 500 | 0.5 |
| Propylene glycol | 7.0 |
| Water To | 100% |
| This is formulated into the following: | |

| | 8/l |
|---|---|
| Concentrate from above | 1000 |
| Rodopol 2% gel | 70 |
| Water To | 100% |

| | % w/v |
|---|---|
| Concentrate from above | 75.0 |
| Atrazine technical | 20.0 |
| Soprophor®FL | 1.25 |
| Proplyene glycol | 1.25 |
| Water To | 100% |

## Claims

1. An aqueous suspension concentrate composition, which has been treated to obtain an average particle size of suspended particles in said composition of less than 20 µm, comprising, on a weight to volume basis 3.0 to 30.0 % coformulants selected from surfactants; dispersing agents; wetting agents; suspending agents; antifreezing agents; antifoaming agents; thickening agents; and preservatives; and 20.0 % to 92.0 % water; characterized in that the pesticides consist of 5.0 to 50.0 % pendimethalin alone or in combination with up to 50.0 % of one or more secondary pesticide(s), selected from Atrazine, [2-chloro-4-ethylamino-6-isopropylamino-1,3,5-triazine], terbutylazine, 2-tert-butylamino-4-chloro-6-ethylamino-1,3,5-triazine and metolachlor, 2-chloro-6'-ethyl-N-(2-methoxy-1-methylethyl)ace-o-toluidide; Imidazolinone herbicides such as 2-(4-isopropyl-4-methyl-5-oxo-2-imidazolin-2-yl)-3-quinolinecarboxylic acid and water soluble salts thereof, or the isomeric mixtures of methyl 6-(4-isopropyl-4-methyl-5-oxo-2-imidazolin-2-yl)-m-toluate and methyl 2-(4-isopropyl-4-methyl-5-oxo-2-imidazolin-2-yl)-p-toluate.

2. A composition according to Claim 1, wherein said surfactants, dispersing agents and wetting agents are ethylene oxide/propylene oxide condensates; alkyl,aryl- and aryl,aryl-ethoxylates and derivatives thereof; lignosulfonates; cresol- formaldehyde condensates and sulfonates; naphthalene-formaldehyde condensates and sulfonates; polycarboxylates and their derivatives; and mixtures thereof.

3. A compositions according to Claim 2, wherein said suspending agents are polysaccharide gums and cellulose derivatives.

4. A composition according to Claim 3, wherein said polysaccharide gums are Xanthan gum, guar gum, gum arabic, and mixtures thereof.

5. A composition according to Claim 4, wherein said antifreezing agents are ethylene glycol, propylene glycol, glycerine, urea, and mixtures thereof.

6. A composition according to Claim 5, wherein said thickening agents are clays, precipitated silicas, polyvinyl alcohol, polyvinylpyrrolidone, polyacrylamides, and mixtures thereof.

7. A composition according to Claim 6, comprising, on a weight to volume basis: 5.0% to 50.0% pendimethalin; 0% to 50.0% of said secondary pesticide with a melting point greater than 70°C or is water soluble; 2.0% to 20.0% surfactants; 0.05% to 2.5% suspending agents; 2.0% to 15.0% antifreesing agents; 0.05% to 2.0% thickening agent; and 0.05% to 2.5% preservatives.

8. A composition according to Claim 7, wherein said antifoaming agent is a siliconic antifoaming agent.

9. A composition according to Claim 8, wherein said preservative is a 38% formaldehyde solution, methyl or propyl parahydroxybenzoate, 2-bromo-2-nitro-propane-1,3-diol, sodium benzoate, glutaraldehyde, O-phenylphenol, benzisothiazolinones, 5-chloro-2-methyl-4-isothiazolin-3-one, pentachlorophenol, 2-4-dichlorobenzylalcohol, or mixtures thereof.

10. A composition according to Claim 8, comprising, on a weight to volume basis: 30.0% to 40.0% pendimethalin; 3.0% to 5.0% sodium cresol-formaldehyde condensate or sodium cresol-formaldehyde sulphonated condensate; 5.0% to 10.0% ethylene glycol or urea; 0.1% to 1.0% antifoaming agent; 0.1% to 0.3% Xanthan gum; 0.2% to 1.0% preservative; and 48.3% to 68.3% water.

11. A composition according to Claim 9, comprising, on a weight to volume basis: 40.0% pendimethalin; 5.0% sodium cresol-formaldehyde sulphonated condensate; 8.0% ethylene glycol; 0.5% siliconic antifoaming agent; 0.2% Xanthan gum; 0.5% of a 38% formaldehyde solution and 51.4% water.

12. A composition according to Claim 1, comprising, on a weight to volume basis: 27.3% pendimethalin; 18.2% atrazine; 3.4% sodium cresol-formaldehyde sulphonated condensate; 5.8% urea; 1.34% polyalkylene glycol ether and polyoxyethylene alkylaryl ether; 0.9% siliconic antifoaming agent; 0.2% xanthan gum; 0.5% of a 38% formaldehyde solution; and 48.9% water.

13. A composition according to Claim 1, comprising, on a weight to volume basis: 30.0% pendimethalin; 5.0% of the water soluble ammonium salt of 2-(4-isopropyl-4-methyl-5-oxo-2-imidazolin-2-yl)-3-quinolinecarboxylic acid; 4.0% sodium lignosulphonate; 8.0% ethylene glycol; 0.5% siliconic antifoaming; 0.75% silica; 0.1% Xanthan gum; 0.25% of a 38.0% formaldehyde solution; and 58.1% water.

14. A composition according to Claim 1, comprising, on a weight to volume basis: 26.0% pendimethalin; 12.5% of an isomeric mixture of methyl 6-(4-isopropyl4-methyl-5-oxo-2-imidazolin-2-yl)-m-toluate and methyl 2-(4-isopropyl-4-methyl-5-oxo-2-imidazolin-2-yl)-p-toluate; 3.0% sodium cresol-formaldehyde condensate; 1.3% triethanolamine salt of polyarylarylethoxylate phosphate; 6.0% alkylphenolethoxylate; 5.0% ethylene glycol; 0.4% siliconic antifoaming agent; 2.0% silica; 0.1% Xanthan gum; 0.25% of a 38% formaldehyde solution; and 49.62% water.

15. Process for manufacturing a stable aqueous suspension concentrate composition of pendimethalin according to Claim 1 comprising the steps of:
(a) emuslifying molten pendimethalin in hot water;
(b) adding a suspending agent;
(c) cooling the resulting emulsion under agitation, whereby the molten pendimethalin is allowed to solidify.

16. Process according to Claim 15, whereby step (c) further comprises milling the composition.

17. Process according to Claim 15 comprising additionally a step of milling the composition resulting from step (c).

18. Process according to Claim 15, 16 or 17, whereby additional higher melting active components and coformulants or a preformed suspension concentrate containing one or more active components and coformulants are added to the composition.

19. Process according to Claim 18 comprising additionally a step of milling the composition.

20. Process according to Claim 18 or 19, whereby the additional higher melting active components and coformulants are antifreezing agents, surfactants, thickeners, or preservatives.

## Patentansprüche

1. Wäßrige Suspensionskonzentrat-Zusammensetzung, die behandelt worden ist, um eine durchschnittliche Teilchengröße von suspendierten Teilchen in der Zusammensetzung von weniger als 20 µm zu erhalten, und die auf einer Gewicht-zu-Volumen-Basis 3,0 bis 30,0% Coformulierungsmittel, ausgewählt aus Tensiden; Dispergiermitteln; Netzmitteln; Suspendiermitteln; Gefrierschutzmitteln; Schaumverhütungsmitteln; Verdickungsmitteln; und Konservierungsmitteln; und 20,0% bis 92,0% Wasser umfaßt; dadurch gekennzeichnet, daß die Pestizide aus 5,0 bis 50,0% Pendimethalin allein oder in Kombination mit bis zu 50,0% eines oder mehrerer sekundärer Pestizide, ausgewählt aus Atrazin [2-Chlor-4-ethylamino-6-isopropylamino-1,3,5-triazin], Terbutylazin, 2-tert-Butylamino-4-chlor-6-ethylamino-1,3,5-triazin und Metolachlor, 2-Chlor-6'-ethyl-N-(2-methoxy-1-methylethyl)acet-o-toluidid; Imidazolinon-Herbiziden, wie 2-(4-Isopropyl-4-methyl-5-oxo-2-imidazolin-2-yl)-3-chinolincarbonsäure und wasserlöslichen Salzen derselben oder den Isomerenmischungen von Methyl-6-(4-isopropyl-4-methyl-5-oxo-2-imidazolin-2-yl)-m-toluat und Methyl-2-(4-isopropyl-4-methyl-5-oxo-2-imidazolin-2-yl)-p-toluat, bestehen.

2. Zusammensetzung nach Anspruch 1, in der die Tenside, Dispergiermittel und Netzmittel Ethylenoxid/Propylenoxid-Kondensate; Alkyl,Aryl- und Aryl,Arylethoxylate und deren Derivate; Lignosulfonate; Kresol-Formaldehyd-Kondensate und -Sulfonate; Naphthalin-Formaldehyd-Kondensate und -Sulfonate; Polycarboxylate und deren Derivate; und Mischungen derselben sind.

3. Zusammensetzung nach Anspruch 2, in der die Suspendiermittel Polysaccharidgummis und Cellulose-Derivate sind.

4. Zusammensetzung nach Anspruch 3, in der die Polysaccharidgummis Xanthangummi, Guargummi, Gummi arabicum und Mischungen derselben sind.

5. Zusammensetzung nach Anspruch 4, in der die Gefrierschutzmittel Ethylenglycol, Propylenglycol, Glycerin, Harnstoff und Mischungen derselben sind.

6. Zusammensetzung nach Anspruch 5, in der die Verdickungsmittel Tone, gefällte Siliciumdioxide, Polyvinylalkohol, Polyvinylpyrrolidon, Polyacrylamide und Mischungen derselben sind.

7. Zusammensetzung nach Anspruch 6, umfassend auf einer Gewicht-zu-Volumen-Basis: 5,0% bis 50,0% Pendimethalin; 0% bis 50,0% des sekundären Pestizids, das einen Schmelzpunkt von mehr als 70°C aufweist oder wasserlöslich ist; 2,0% bis 20,0% Tenside; 0,05% bis 2,5% Suspendiermittel; 2,0% bis 15,0% Gefrierschutzmittel; 0,05% bis 2,0% Verdickungsmittel; und 0,05% bis 2,5% Konservierungsmittel.

8. Zusammensetzung nach Anspruch 7, in der das Schaumverhütungsmittel ein Silicon-Schaumverhütungsmittel ist.

9. Zusammensetzung nach Anspruch 8, in der es sich bei dem Konservierungsmittel um eine 38%-ige Formaldehydlösung, Methyl- oder Propylparahydroxybenzoat, 2-Brom-2-nitropropan-1,3-diol, Natriumbenzoat, Glutaraldehyd, O-Phenylphenol, Benzisothiazolinone, 5-Chlor-2-methyl-4-isothiazolin-3-on, Pentachlorphenol, 2,4-Dichlorbenzylalkohol oder Mischungen derselben handelt.

10. Zusammensetzung nach Anspruch 8, umfassend auf einer Gewicht-zu-Volumen-Basis: 30,0% bis 40,0% Pendimethalin; 3,0% bis 5,0% Natriumkresol-Formaldehyd-Kondensat oder sulfoniertes Natriumkresol-Formaldehyd-Kondensat; 5,0% bis 10,0% Ethylenglycol oder Harnstoff; 0,1% bis 1,0% Schaumverhütungsmittel; 0,1% bis 0,3% Xanthangummi; 0,2% bis 1,0% Konservierungsmittel; und 48,3% bis 68,3% Wasser.

11. Zusammensetzung nach Anspruch 9, umfassend auf einer Gewicht-zu-Volumen-Basis: 40,0% Pendimethalin; 5,0% sulfoniertes Natriumkresol-Formaldehyd-Kondensat; 8,0% Ethylenglycol; 0,5% Silicon-Schaumverhütungsmittel; 0,2% Xanthangummi; 0,5% einer 38%-igen Formaldehydlösung und 51,4% Wasser.

12. Zusammensetzung nach Anspruch 1, umfassend auf einer Gewicht-zu-Volumen-Basis: 27,3% Pendimethalin; 18,2% Atrazin; 3,4% sulfoniertes Natriumkresol-Formaldehyd-Kondensat; 5,8% Harnstoff; 1,34% Polyalkylenglycolether und Polyoxyethylenalkylarylether; 0,9% Silicon-Schaumverhütungsmittel; 0,2% Xanthangummi; 0,5% einer 38%-igen Formaldehydlösung; und 48,9% Wasser.

13. Zusammensetzung nach Anspruch 1, umfassend auf einer Gewicht-zu-Volumen-Basis: 30,0% Pendimethalin; 5,0% des wasserlöslichen Ammoniumsalzes von 2-(4-Isopropyl-4-methyl-5-oxo-2-imidazolin-2-yl)-3-chinolincarbonsäure; 4,0% Natriumlignosulfonat; 8,0% Ethylenglycol; 0,5% Silicon-Schaumverhütungsmittel; 0,75% Siliciumdioxid; 0,1% Xanthangummi; 0,25% einer 38,0%-igen Formaldehydlösung; und 58,1% Wasser.

14. Zusammensetzung nach Anspruch 1, umfassend auf einer Gewicht-zu-Volumen-Basis: 26,0% Pendimethalin; 12,5% einer isomeren Mischung von Methyl-6-(4-isopropyl-4-methyl-5-oxo-2-imidazolin-2-yl)-m-toluat und Methyl-2-(4-isopropyl-4-methyl-5-oxo-2-imidazolin-2-yl)-p-toluat; 3,0% Natriumkresol-Formaldehyd-Kondensat; 1,3% Triethanolaminsalz von Polyarylarylethoxylatphosphat; 6,0% Alkylphenolethoxylat; 5,0% Ethylenglycol; 0,4% Silicon-Schaumverhütungsmittel; 2,0% Siliciumdioxid; 0,1% Xanthangummi; 0,25% einer 38%-igen Formaldehydlösung; und 49,62% Wasser.

15. Verfahren zur Herstellung einer stabilen wäßrigen Suspensionskonzentrat-Zusammensetzung von Pendimethalin nach Anspruch 1, umfassend die Schritte:
(a) Emulgieren von geschmolzenem Pendimethalin in heißem Wasser;
(b) Zugeben eines Suspendiermittels;
(c) Abkühlen der resultierenden Emulsion unter Rühren, wodurch die Verfestigung des geschmolzenen Pendimethalins ermöglicht wird.

16. Verfahren nach Anspruch 15, in dem der Schritt (c) weiter das Kahlen der Zusammensetzung umfaßt.

17. Verfahren nach Anspruch 15, das den zusätzlichen Schritt des Mahlens der aus Schritt (c) resultierenden Zusammensetzung umfaßt.

18. Verfahren nach Anspruch 15, 16 oder 17, in dem zusätzliche höherschmelzende aktive Komponenten und Coformulierungsmittel oder ein vorgebildetes Suspensionskonzentrat, das eine oder mehrere aktive Komponenten und Coformulierungsmittel enthält, zu der Zusammensetzung gegeben werden.

19. Verfahren nach Anspruch 18, das zusätzlich einen Schritt des Mahlens der Zusammensetzung umfaßt.

20. Verfahren nach Anspruch 18 oder 19, in dem die zusätzlichen höherschmelzenden aktiven Komponenten und Coformulierungsmittel Gefrierschutzmittel, Tenside, Verdickungsmittel oder Konservierungsmittel sind.

## Revendications

1. Composition concentrée en suspension aqueuse, qui a été traitée pour obtenir une taille de particule moyenne des particules en suspension dans ladite composition inférieure à 20 µm, comprenant sur une base poids/volume, de 3,0 à 30,0% de co-ingrédients choisis parmi des tensioactifs ; des agents dispersants ; des agents mouillants ; des agents de suspension ; des agents antigels ; des agents antimousse ; des agents épaississants ; et des conservateurs ; et de 20,0% à 92,0% d'eau ; caractérisée en ce que les pesticides sont composés de 5,0 à 50,0% de pendiméthaline seule ou en combinaison avec jusqu'à 50,0% d'un ou plusieurs pesticides secondaires, choisis parmi l'atrazine, [2-chloro-4-éthylamino-6-isopropylamino-1,3,5-triazine], la terbutylazine, 2-tert-butylamino-4-chloro-6-éthylamino-1,3,5-triazine et le métolachlor, 2-chloro-6'-éthyl-N-(2-méthoxy-1-méthyléthyl)acét-o-toluidide ; des herbicides à base d'imidazolinone tels que l'acide 2-(4-isopropyl-4-méthyl-5-oxo-2-imidazolin-2-yl)-3-quinolinecarboxylique et des sels hydrosolubles de cet acide, ou les mélanges isomères de 6-(4-isopropyl-4-méthyl-5-oxo-2-imidazolin-2-yl)-m-toluate de méthyle et de 2-(4-isopropyl-4-méthyl-5-oxo-2-imidazolin-2-yl)-p-toluate de méthyle.

2. Composition selon la revendication 1, dans laquelle les tensioactifs, les agents dispersants et les agents mouillants sont des condensats d'oxyde d'éthylène/oxyde de propylène ; des alkyl, aryl- et aryl, aryl-éthylates et des dérivés de ces substances ; des lignosulfonates ; des condensats et des sulfonates de crésol-formaldéhyde ; des condensats et des sulfonates de naphtalène-formaldéhyde ; des polycarboxylates et leurs dérivés ; et des mélanges de ces substances.

3. Composition selon la revendication 2, dans laquelle les agents de suspension sont des gommes polysaccharides et des dérivés de la cellulose.

4. Composition selon la revendication 3, dans laquelle les gommes polysaccharides sont la gomme de xanthane, la gomme de guar, la gomme arabique, et des mélanges de ces substances.

5. Composition selon la revendication 4, dans laquelle les agents antigels sont l'éthylène glycol, le propylène glycol, la glycérine, l'urée, et des mélanges de ces substances.

6. Composition selon la revendication 5, dans laquelle les agents épaississants sont des argiles, des silices précipitées, de l'alcool polyvinylique, de la polyvinylpyrrolidone, des polyacrylamides, et des mélanges de ces substances.

7. Composition selon la revendication 6, comprenant, sur une base poids/volume : de 5,0% à 50,0% de pendiméthaline ; de 0% à 50,0% du pesticide secondaire ayant un point de fusion supérieur à 70°C ou hydrosoluble ; de 2,0% à 20,0% de tensioactifs ; de 0,05% à 2,5% d'agents de suspension ; de 2,0% à 15,0% d'agents antigels ; de 0,05% à 2,0% d'agent épaississant ; et de 0,05% à 2,5% de conservateurs.

8. Composition selon la revendication 7, dans laquelle l'agent antimousse est un agent antimousse siliconique.

9. Composition selon la revendication 8, dans laquelle le conservateur est une solution de formaldéhyde à 38%, du parahydroxybenzoate de méthyle ou de propyle, du 2-bromo-2-nitro-propane-1,3-diol, du benzoate de sodium, du glutaraldéhyde, de l'o-phénylphénol, des benzisothiazolinones, de la 5-chloro-2-méthyl-4-isothiazolin-3-one, du pentachlorophénol, de l'alcool 2,4-dichlorobenzylique, ou des mélanges de ces substances.

10. Composition selon la revendication 8, comprenant, sur une base poids/volume : de 30,0% à 40,0% de pendiméthaline ; de 3,0% à 5,0% de condensat de crésol-formaldéhyde sodium ou de condensat sulfoné de crésol-formaldéhyde sodium ; de 5,0% à 10, 0% d'éthylène glycol ou d'urée ; de 0,1% à 1,0% d'agent antimousse ; de 0,1% à 0,3% de gomme de xanthane ; de 0,2% à 1,0% de conservateur ; et de 48,3% à 68,3% d'eau.

11. Composition selon la revendication 9, comprenant, sur une base poids/volume : 40,0% de pendiméthaline ; 5,0% de condensat sulfoné de crésol-formaldéhyde sodium ; 8,0% d'éthylène glycol ; 0,5% d'agent antimousse siliconique ; 0,2% de gomme de xanthane ; 0,5% d'une solution de formaldéhyde à 38% ; et 51,4% d'eau.

12. Composition selon la revendication 1, comprenant, sur une base poids/volume : 27,3% de pendiméthaline ; 18,2% d'atrazine ; 3,4% de condensat sulfoné de crésol-formaldéhyde sodium ; 5,8% d'urée ; 1,34% de polyalkylène glycoléther et de polyoxyéthylène alkylaryléther ; 0,9% d'agent antimousse siliconique ; 0,2% de gomme de xanthane ; 0,5% d'une solution de formaldéhyde à 38% ; et 48,9% d'eau.

13. Composition selon la revendication 1, comprenant, sur une base poids/volume : 30,0% de pendiméthaline ; 5,0% du sel d'ammonium hydrosoluble de l'acide 2-(4-isopropyl-4-méthyl-5-oxo-2-imidazolin-2-yl)-3-quinolinecarboxylique ; 4,0% de lignosulfonate de sodium ; 8,0% d'éthylène glycol ; 0,5% d'agent antimousse siliconique ; 0,75% de silice ; 0,1% de gomme de xanthane ; 0,25% d'une solution de formaldéhyde à 38,0% ; et 58,1% d'eau.

14. Composition selon la revendication 1, comprenant, sur une base poids/volume : 26,0% de pendiméthaline, 12,5% d'un mélange isomère de 6-(4-isopropyl-4-méthyl-5-oxo-2-imidazolin-2-yl)-m-toluate de méthyle et de 2-(4-isopropyl-4-méthyl-5-oxo-2-imidazolin-2-yl)-p-toluate de méthyle ; 3,0% de condensat de crésol-formaldéhyde sodium ; 1,3% de sel de polyarylaryléthylate phosphate de triéthanolamine ; 6,0% d'alkylphénoléthylate ; 5,0% d'éthylène glycol ; 0,4% d'agent antimousse siliconique ; 2,0% de silice ; 0,1% de gomme de xanthane ; 0,25% d'une solution de formaldéhyde à 38% ; et 49,62% d'eau.

15. Procédé de fabrication d'une composition concentrée en suspension aqueuse stable de pendiméthaline selon la revendication 1 comprenant les étapes suivantes :
(a) émulsionner la pendiméthaline fondue dans de l'eau chaude ;
(b) ajouter un agent de suspension ;
(c) refroidir l'émulsion obtenue sous agitation, pour permettre la solidification de la pendiméthaline fondue.

16. Procédé selon la revendication 15, dans lequel l'étape (c) inclut également le broyage de la composition.

17. Procédé selon la revendication 15, comprenant en plus une étape de broyage de la composition obtenue à l'étape (c).

18. Procédé selon la revendication 15, la revendication 16 ou la revendication 17, dans lequel des composants actifs à point de fusion plus élevé et des co-ingrédients supplémentaires, ou un concentré en suspension préformé contenant un ou plusieurs composants actifs et co-ingrédients sont rajoutés à la composition.

19. Procédé selon la revendication 18, comprenant en plus une étape de broyage de la composition.

20. Procédé selon la revendication 18 ou la revendication 19, dans lequel les composants actifs à point de fusion plus élevé et co-ingrédients supplémentaires sont des agents antigels, des tensioactifs, des agents épaississants, ou des conservateurs.
